**Europäisches Patentamt**

**European Patent Office**

**Office européen des brevets**

(11) Numéro de publication : **0 324 693 B1**

(12) **FASCICULE DE BREVET EUROPEEN**

(45) Date de publication du fascicule du brevet :
**21.10.92 Bulletin 92/43**

(21) Numéro de dépôt : **89400102.3**

(22) Date de dépôt : **12.01.89**

(51) Int. Cl.⁵ : **F16F 3/10, B60K 5/12**

(54) **Supports elastiques de suspension.**

(30) Priorité : **15.01.88 FR 8800435**
**17.05.88 FR 8806584**

(43) Date de publication de la demande :
**19.07.89 Bulletin 89/29**

(45) Mention de la délivrance du brevet :
**21.10.92 Bulletin 92/43**

(84) Etats contractants désignés :
**BE DE ES FR GB IT LU NL SE**

(56) Documents cités :
**EP-A- 0 042 068**
**EP-A- 0 054 493**
**EP-A- 0 055 824**
**EP-A- 0 132 048**
**EP-A- 0 192 936**
**EP-A- 0 223 617**
**CH-A- 213 983**
**DE-B- 1 228 863**
**DE-C- 2 944 439**
**FR-A- 2 138 543**
**FR-A- 2 362 308**

(56) Documents cités :
**FR-A- 2 418 389**
**FR-A- 2 451 511**
**GB-A- 1 024 554**
**GB-A- 1 098 424**
**GB-A- 1 511 692**
**GB-A- 1 539 018**
**US-A- 2 612 370**
**US-A- 2 913 240**
**US-A- 2 965 349**

(73) Titulaire : **HUTCHINSON**
**2 rue Balzac**
**F-75008 Paris (FR)**

(72) Inventeur : **Simon, Jean-Michel**
**86, rue de Chatillon**
**F-92140 Clamart (FR)**
Inventeur : **Ciolczyk, Jean-Pierre**
**26, rue Duchesne Rabier**
**F-45000 Montargis (FR)**

(74) Mandataire : **Picard, Jean-Claude Georges et al**
**Cabinet Plasseraud 84, rue d'Amsterdam**
**F-75009 Paris (FR)**

EP 0 324 693 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne les supports élastiques de suspension du type comportant deux armatures pourvues de moyens de fixation respectivement à deux ensembles entre lesquels le support doit être intercalé.

Il pourra s'agir notamment, mais non exclusivement, des supports destinés à la suspension d'une carrosserie de véhicule, en particulier au niveau de la traverse du train arrière. Il pourra s'agir également de supports destinés à la suspension d'un moteur, ces supports pouvant avoir des caractéristiques différentes de celles des supports de carrosserie.

Le but de la présente invention est, d'une façon générale, d'obtenir des supports relativement simples et bon marché, à haute fiabilité, et qui en particulier ne présentent pas les inconvénients du caoutchouc ou des élastomères lorsque l'on souhaite obtenir des raideurs très faibles. Dans ce cas, on est en effet obligé de réduire l'épaisseur travaillante de l'élastomère, et ce matériau devient alors très sensible au risque de fluage et de flambage, ce qu'il convient d'éviter. C'est le cas du dispositif du document GB-A-1 098 424 qui comporte comme élément élastique une enveloppe de caoutchouc remplie d'un liquide.

Pour ce faire l'invention porte donc sur un support élastique de suspension du type mentionné au début et comportant, comme élément élastique principal, destiné à supporter la charge, au moins un organe tubulaire élastique ou profilé ouvert dont l'axe (y) s'étend perpendiculairement à la direction principale (z) dans laquelle s'exerce ladite charge, et dont la forme, l'épaisseur et les constituants confèrent au support la raideur souhaitée dans cette direction principale, des moyens de liaison appropriés étant prévus de part et d'autre dudit organe tubulaire ou profilé ouvert pour sa fixation entre lesdites armatures, support dans lequel lesdits moyens de liaison comprennent un matériau élastique constitué d'une masse de type caoutchouc ou élastomère adhérisée ou fixée par d'autres moyens entre chaque organe tubulaire et l'armature correspondante et permettant audit organe tubulaire ou profilé ouvert de rouler ou de basculer suivant l'axe (y) sur lesdits moyens de liaison.

Par le choix de la forme (élancement) de cet organe tubulaire, du matériau qui le constitue et de son épaisseur, on conçoit que l'on pourra obtenir si nécessaire une faible raideur, au moins dans la direction dans laquelle s'exerce la charge principale, et sans le risque de fluage ou de flambage qu'impliquerait la seule utilisation d'un élastomère ou de caoutchouc.

Pour ce qui est des moyens de liaison à prévoir de part et d'autre du ou des organes tubulaires pour les fixer entre les armatures du support, on prévoit avantageusement qu'ils comprennent un élastomère adhérisé ou fixé par d'autres moyens, tels que des moyens mécaniques, entre chaque organe tubulaire et l'armature correspondante.

Un élastomère constitue à ce niveau un excellent moyen de liaison, car il permet de très bien répartir les contraintes entre les armatures (qui sont en principe plates) et les organes tubulaires élastiques ; en outre, il peut servir à amortir les vibrations. Son épaisseur sera choisie en fonction des besoins, et notamment en fonction de la raideur que l'on souhaitera conférer au support dans la direction de l'axe du ou des organes tubulaires. Cette notion sera revue plus bas.

Pour ce qui est maintenant du matériau constituant ledit organe tubulaire, on pourra utiliser avantageusement tout matériau composite approprié, se présentant par exemple sous la forme d'un enroulement filamentaire noyé dans une résine.

Il pourra s'agir par exemple de fibres de tout matériau ayant la résistance à la traction appropriée, par exemple de verre, de carbone, de kevlar, etc, noyées dans une résine epoxy ou analogue, l'enroulement étant effectué, de préférence, selon la périphérie de l'organe tubulaire, en une ou plusieurs couches hélicoïdales.

Le support ainsi obtenu répond aux spécifications énoncées plus haut, du fait de la relativement grande capacité d'allongement de telles fibres (10 fois plus grande environ que celle de l'acier), ce qui permet d'obtenir une grande souplesse dans la direction voulue, notamment dans la direction de la charge principale.

Ces fibres présentent aussi, comme l'acier (qui à la rigueur pourrait être utilisé dans certains cas), un fluage très faible et une faible augmentation de la raideur en fréquence, ce qui, comme on le verra plus bas, présente un avantage notable dans certaines applications. De plus, toute possibilité de flambage est pratiquement éliminée.

Quant à la section transversale des organes tubulaires elle pourra constituer un paramètre supplémentaire de réglage et être par exemple au moins approximativement circulaire, elliptique ou ovale.

Dans le cas d'une section elliptique ou analogue, à savoir ayant une dimension supérieure, dans une direction, à la dimension qu'elle a dans la direction perpendiculaire à la précédente, il pourra être avantageux de prévoir en outre que l'organe tubulaire considéré sera disposé avec son grand axe dirigé selon la direction principale dans laquelle s'exerce la charge, c'est-à-dire perpendiculairement au plan des armatures, son petit axe étant évidemment perpendiculaire à cette direction ainsi qu'à l'axe de l'organe tubulaire.

Cette disposition des sections elliptiques ou analogues est avantageuse en ce que l'on permet ainsi d'augmenter l'effet d'un faible déplacement vertical des armatures l'une par rapport à l'autre, en le traduisant par un déplacement plus important sur les parties latérales non directement sollicitées de l'organe tubulaire, et d'avoir ainsi une plus grande latitude de réglage sur le déplacement dans la direction (appelée plus bas "direction longitudinale") qui est à la fois perpendiculaire à la direction principale dans laquelle s'exerce la charge et perpendiculaire à l'axe de cet organe tubulaire.

Selon encore une autre disposition de l'invention, on peut prévoir de disposer entre les armatures au moins deux organes tubulaires élastiques disposés, avec un écartement, parallèlement l'un à l'autre.

Dans son principe, le fonctionnement du support sera essentiellement le même que dans le cas d'un seul organe tubulaire.

Outre qu'elle permet de résoudre très simplement le problème énoncé au début, ainsi que d'autres problèmes plus spécifiques qui seront vus plus bas, la présente invention permet d'obtenir facilement des supports amortis, et ceci sans aucune augmentation de l'encombrement.

Pour ce faire, on peut en effet incorporer au support un matériau amortisseur approprié, notamment un élastomère à fort coefficient d'amortissement, par exemple en butyl, pour relier deux parois opposées des organes tubulaires (celles qui sont susceptibles de s'écarter le plus l'une de l'autre), ou encore on peut disposer dans ces organes tubulaires, ou dans d'autres cavités du support, un matériau de remplissage, par exemple un gel de silicone ou une mousse à cellules fermées.

Il pourra encore être intéressant d'obtenir un support élastique précontraint. Pour cela il suffira de mouler la matière élastomère de part et d'autre du ou des organes tubulaires, ceux-ci étant mis sous précontrainte par une pression exercée dans la direction de la charge principale. On obtiendra ainsi un support beaucoup moins encombrant et plus facile à régler qu'un support non précontraint.

Parmi les problèmes plus spécifiques que les supports conformes à l'invention permettent de résoudre, on peut citer notamment celui de l'obtention de supports à raideurs très anisotropes selon trois directions orthogonales, et celui de l'obtention de supports à gradient de raideur dans la direction de la charge principale, ou "direction verticale".

Le premier type de supports pourra comprendre en particulier ceux destinés à la suspension d'une carrosserie de véhicule automobile, notamment au niveau de la traverse du train arrière.

Dans ce type d'application on cherche à obtenir un support présentant une très forte anisotropie dans les directions de ses trois axes orthogonaux x, y et z. En particulier, on cherche à obtenir :

– une très grande raideur Ky dans la direction transversale du véhicule, ou axe des y, à savoir une raideur de l'ordre de 10 000 N/mm, ceci pour éviter un déplacement latéral de la carrosserie par rapport aux roues en virage ;

– une très faible raideur Kx dans la direction longitudinale du véhicule, ou axe des x, à savoir une raideur de l'ordre de 50 N/mm, ceci pour diminuer au maximum les bruits de roulement du véhicule (Ky/Kx de l'ordre de 200) ;

– une raideur Kz moyenne en direction verticale (appelée plus haut "direction principale de la charge") ou axe des z, à savoir une raideur de l'ordre de 750 N/mm.

Bien entendu, toutes ces valeurs sont fournies à titre purement indicatif.

Jusqu'à présent, on a eu beaucoup de difficultés à obtenir la grande anisotropie souhaitée, et en particulier le rapport précité de 200 entre les raideurs transversale et longitudinale, même avec des plots élastiques lamifiés caoutchouc/métal.

On conçoit maintenant que le support décrit plus haut, dans l'un ou l'autre de ses modes de réalisation, pourra résoudre facilement ce problème.

Il suffira en effet que le ou les organes tubulaires du support s'étendent dans ce que l'on a appelé plus haut la direction transversale y du véhicule, et que l'épaisseur de l'élastomère qui les relie aux armatures soit suffisamment faible pour conserver une grande raideur du support dans cette direction.

Ceci étant, on conçoit que l'on pourra obtenir la très grande anisotropie souhaitée dans certains cas entre les raideurs transversale (Ky) et longitudinale (Kx). En effet, dans la direction longitudinale chaque organe tubulaire peut rouler ou basculer sans grande résistance, ce qui permet d'obtenir une très faible valeur pour Kx (le roulement s'effectue comme celui d'une chenille de véhicule tout terrain, mais bien entendu sous un angle très faible). Par contre, la déformation en direction transversale pourra être très limitée et la raideur très importante, puisque déterminée essentiellement par le cisaillement du matériau au niveau desdits moyens de liaison entre ledit organe tubulaire et les armatures, cet organe ayant quant à lui une très grande raideur dans cette direction y. Cela sera encore vu par la suite, à la lecture de la description d'exemples faite plus bas, avec référence au dessin.

Quant à la raideur intermédiaire dans la direction z, on pourra facilement lui conférer la valeur voulue, comme il a été indiqué plus haut, par un choix approprié du matériau constituant les organes tubulaires, de son épaisseur et de la forme de ces organes.

En cas de besoin on peut d'ailleurs augmenter encore la raideur du support en direction transversale en prévoyant sur lesdites armatures des crans faisant saillie au moins vers l'intérieur du support et dirigés, parallèlement les uns aux autres, dans la direction longitudinale.

On comprend que l'on réduit ainsi, et de façon très importante, le cisaillement de l'élastomère entre l'organe tubulaire et chaque armature dans la direction y.

Un support conforme à l'invention peut encore être aménagé pour pouvoir être utilisé dans d'autres applications ou dans des applications voisines, par exemple pour la suspension de moteurs de véhicules.

On va voir plus bas qu'avec le même principe de baser on peut obtenir d'autres caractéristiques du support ou des caractéristiques complémentaires adaptées au problème posé.

Pour supporter un moteur, on cherche à obtenir un support élastique tel que, dans une large gamme de fréquences (de 0 à 300 Hz) et pour de faibles oscillations (d'une amplitude de l'ordre de $\pm 0,1$ mm), la raideur dynamique Kd ne diffère que peu de la raideur statique Ks. Par contre, pour des amplitudes sensiblement plus fortes (de l'ordre de $\pm 1$ mm d'amplitude), la raideur dynamique Kd doit être beaucoup plus grande que la raideur statique Ks (de 3 à 4 fois plus grande). La raideur statique Ks doit être très basse, de l'ordre de 50 à 80 N/mm, ce qui est difficile à obtenir sans fluage. Jusqu'à présent on n'a pu résoudre ce problème que de façon imparfaite, et ceci avec deux types de supports :

    – les supports hydrauliques, qui sont assez complexes et donc coûteux ; il leur est en outre difficile de présenter la très faible raideur statique souhaités, sans risque de fluage de leurs composants en élastomère.

    – les supports en élastomère à gradient de raideur, dont la raideur augmente brusquement à partir d'un certain degré de déformation, et constitués par l'empilement d'un ressort "dur" en caoutchouc et d'un ressort "mou", à savoir d'un ressort à faible raideur.

Il est cependant très difficile de réaliser un tel ressort à faible raideur, de l'ordre de 50 à 80 N/mm, qui supporte en permanence une charge statique de l'ordre de 1 000 N, et qui ne rencontre pas de problème de fluage dans un compartiment moteur.

Un but supplémentaire de l'invention est donc de résoudre ce problème plus spécifique, qui est d'obtenir un support à gradient de raideur qui présente les caractéristiques indiquées plus haut, notamment l'absence de raidissement en fréquence et l'absence de fluage, et ceci avec un support du type général défini au début, seulement complété par quelques agencements appropriés.

A cet effet on utilisera, conformément à une disposition complémentaire de l'invention, un support du type défini au début, à organe tubulaire en un matériau composite constitué par exemple d'un enroulement filamentaire noyé dans une résine, et comportant en outre un élément élastique possédant un gradient de raideur en direction verticale (axe des z), à savoir dont la raideur augmente brusquement lorsqu'un écrasement déterminé du support est atteint.

Dans le cas d'une application aux supports de moteurs, cette structure permet d'obtenir facilement une faible raideur verticale sans risque de fluage, car le matériau composite y est très peu sensible, comme cela a été souligné plus haut. De même, il n'y a pas de raidissement en fréquence, le matériau composite n'en présentant pratiquement pas.

Pour conférer en outre, à un tel support, le gradient de raideur souhaité, on peut utiliser plusieurs moyens.

On peut utiliser, selon un premier mode de réalisation, un support du type comportant entre lesdites armatures au moins deux organes tubulaires élastiques disposés, avec un écartement, parallèlement l'un à l'autre, au moins un espace vide d'élastomère étant prévu entre lesdits organes tubulaires, caractérisé en ce que ledit espace vide comporte plusieurs alvéoles fermés constitués dans l'élastomère et superposés, dont la section transversale s'étend essentiellement en direction horizontale, ces alvéoles étant destinés à être totalement aplatis lorsque ledit écrasement déterminé du support est atteint.

On conçoit en effet que la raideur du support en direction verticale augmentera brusquement à partir du moment où lesdits alvéoles seront complètement aplatis et où, par conséquent, la raideur verticale sera pratiquement celle de l'élastomère occupant l'espace compris entre les deux organes tubulaires.

Selon un second mode de réalisation, on peut utiliser un support du type comportant entre lesdites armatures au moins deux organes tubulaires élastiques disposés, avec un écartement, parallèlement l'un à l'autre, au moins un espace vide d'élastomère étant prévu entre lesdits organes tubulaires, caractérisé en ce que la section transversale dudit espace vide s'étend essentiellement en direction verticale, cet espace étant destiné à être totalement aplati lorsque ledit écrasement déterminé du support est atteint, cet aplatissement étant consécutif à un élargissement de la section transversale desdits organes tubulaires.

Selon une variante de ces modes de réalisation, on peut prévoir que le support comporte en outre un organe tubulaire externe, entourant les deux dits organes tubulaires disposés parallèlement l'un à l'autre, ces derniers étant constitués d'un matériau composite à raideur relativement grande, tandis que ledit organe tubulaire externe est constitué d'un matériau composite à faible raideur.

Ainsi, la raideur du support en direction verticale (axe des z) pourra rester très faible jusqu'au moment de l'aplatissement complet des alvéoles (ou dudit espace vide), à partir duquel, comme souhaité, la raideur du support augmentera brusquement.

Selon une autre variante, s'apparentant à la variante précitée lorsqu'elle est appliquée au second mode de réalisation, on peut encore utiliser un support caractérisé en ce que ledit organe tubulaire est disposé de sorte que sa section transversale s'étende globalement dans ladite direction longitudinale, et en ce que ledit élément élastique est constitué par au moins une paire de jambages de matériau composite enrobé d'élastomère, s'étendant approximativement en direction verticale et reliant les parois opposées dudit organe tubulaire, étant ainsi comprimés en bout sous l'action des efforts verticaux s'exerçant sur lesdits armatures, les jambages de la même paire étant légèrement courbés l'un vers l'autre, de telle sorte que lorsqu'un effort vertical déterminé est atteint, ils prennent appui l'un sur l'autre, ce qui augmente brusquement la raideur du support dans la direction verticale.

On conçoit que ce support à gradient de raideur fonctionne selon pratiquement le même principe que celui dans lequel on met en oeuvre l'aplatissement de l'espace vide qui s'étend entre deux organes tubulaires voisins. En effet, les jambages se comportent comme celles des parois des organes tubulaires qui viennent en appui l'une sur l'autre lors dudit aplatissement dudit espace vide, à partir duquel la raideur du support en direction verticale augmente brusquement.

Encore un autre but de la présente invention est de permettre, tout en conservant les avantages susindiqués, de faciliter la fabrication des organes tubulaires élastiques, de la rendre moins coûteuse, et de permettre la mise en oeuvre d'un procédé de fabrication à grande productivité.

Pour ce faire, un support élastique du type général défini au début pourra encore être, conformément à une variante constructive de la présente invention, essentiellement caractérisé en ce que ledit organe tubulaire élastique est constitué d'au moins un profilé ouvert. Les profilés pourront par exemple être au nombre de deux et être identiques, auquel cas ils seront avantageusement disposés symétriquement l'un de l'autre par rapport à un plan défini par ladite direction principale (z) et par ledit axe (y). Des profilés pourront être ouverts l'un vers l'autre ou à l'opposé l'un de l'autre.

Quel que soit le mode de réalisation choisi, on voit en tout cas que ces profilés étant ouverts, ayant ainsi une forme de gouttière, on pourra les fabriquer par pultrusion, à savoir par un procédé de fabrication continu consistant à mettre en forme une bande de tissu, nappe à fibres unidirectionnelles ou analogue en défilement, faite de fibres résistances (verre, carbone, kevlar, etc), pour lui conférer le profil voulu, et à l'imprégner d'une résine appropriée qui est ensuite polymérisée.

On évite ainsi tout procédé coûteux de bobinage des organes tubulaires tout en conservant les avantages que ceux-ci présentent sur le plan des caractéristiques élastiques ainsi que de leur facilité de fixation aux armatures du support.

On pourra prévoir par exemple, à cet effet, que lesdits moyens de fixation du ou des organes tubulaires aux armatures comprennent des ancrages des bords longitudinaux desdits organes dans un ou plusieurs blocs d'élastomère adhérisés aux armatures.

Selon une variante, lesdits bords longitudinaux des organes tubulaires sont orientés dans des plans parallèles à un plan défini par la direction principale (z) et par ledit axe (y).

Selon une autre variante, ces bords peuvent au contraire être orientés dans des plans perpendiculaires à la direction principale (z) dans laquelle s'exerce la charge.

Enfin, et quel que soit le mode de réalisation choisi, il sera encore avantageux que les organes tubulaires soient enrobés dans une couche d'élastomère de protection, laquelle pourra éventuellement présenter des bourrelets.

On va maintenant décrire succinctement les différentes figures du dessin annexé, qui, à l'exception des figures 1a, 17 et 18 sont toutes des vues en coupe transversale, éventuellement partielles, de différents supports élastiques conformes à l'invention, illustrant les différentes formes de réalisation susdécrites, la figure 1a montrant une coupe verticale des armatures, et les figures 17 et 18 des vues en perspective de profilés ouverts destinés à constituer des organes tubulaires.

Il est précisé tout d'abord que pour ne pas multiplier la description et la représentation de variantes --qui sont en très grand nombre-- on supposera dans ce qui suit que tous les supports et même, le cas échéant, les supports à gradient de raideur verticale, sont du type à raideurs anisotropes. Ils pourraient tous être, au contraire, à raideurs isotropes ou partiellement isotropes, pouvant présenter par exemple, dans certains cas, sensiblement la même raideur en direction longitudinale (x) qu'en direction transversale (y), notamment pour ce qui est des supports de moteur, à gradient de raideur verticale.

Par rapport à ce qui est représenté et décrit dans ce qui suit, il suffirait par exemple, pour ce faire, d'augmenter l'épaisseur de l'élastomère de liaison entre les armatures et les organes tubulaires, pour lui conférer une moins grande raideur transversale.

On pourrait également envisager de superposer deux supports identiques, en croisant à angle droit les directions respectives des organes tubulaires, les raideurs dans les directions x et y pouvant alors être facilement rendues égales, avec des supports identiques.

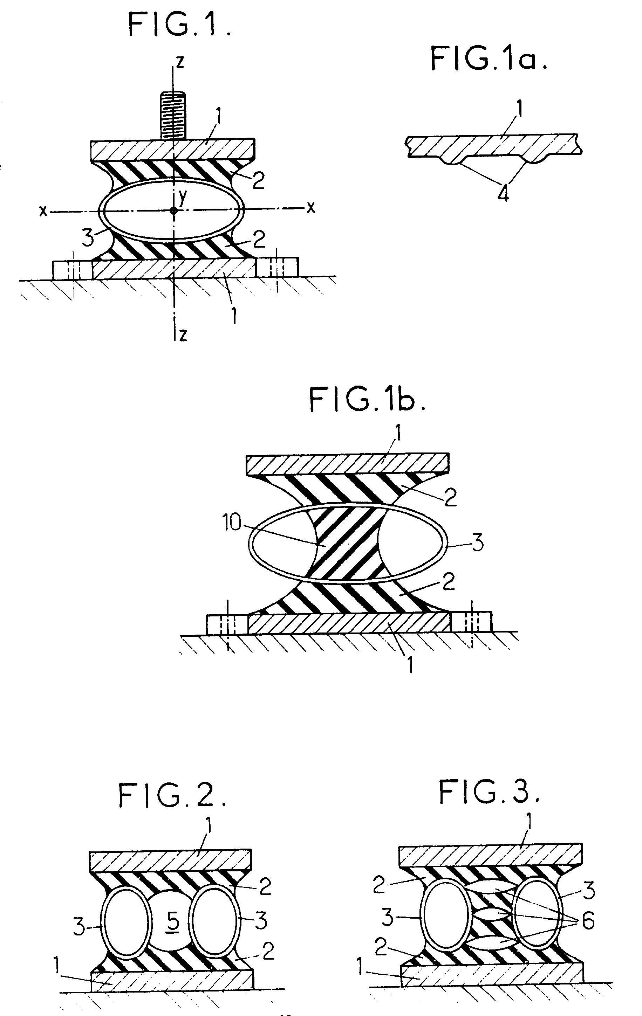

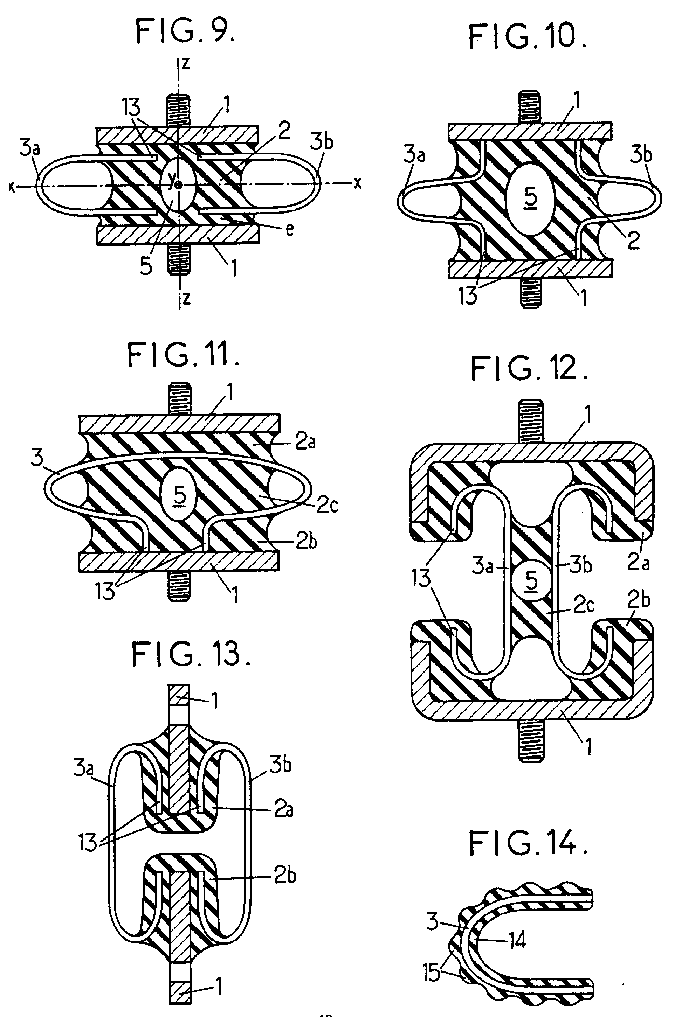

Sur les figures, 1 désigne les armatures du support et 2 l'élastomère de liaison entre ces armatures et le ou les organes tubulaires en matériau composite. Les axes x (direction longitudinale à faible raideur), y (direction transversale à forte raideur) et z (direction verticale à raideur intermédiaire) ont été représentés uniquement sur les figures 1 et 9. Ces axes sont orientés de la même façon sur les autres figures.

La figures 1 représente la mode de réalisation le plus simple, à un seul organe tubulaire, lequel a été référencé en 3. Sa section transversale est ovale ou elliptique en son grand axe est celui des x.

La très faible raideur du support dans la direction x est obtenue par suite du roulement de l'organe 3 sur les moyens de liaison 2 lorsque des efforts horizontaux de sens opposés s'exercent sur les armatures 1 dans cette direction x. Sa grande raideur dans la direction y est due à la grande raideur du tube 3 dans cette direction, ainsi qu'au faible cisaillement de l'élastomère 2, encore diminué du fait des crans 4 des armatures, visibles sur la figures 1a. Quant à la raideur en direction verticale z, elle est essentiellement celle du tube 3 dans cette direction et intermédiaire entre les deux autres (les valeurs des raideurs respectives ont été données plus haut).

Un tel support est par suite particulièrement bien adapté à la suspension d'une carrosserie de véhicule automobile, pour les raisons indiquées également plus haut.

La variante de la figure 1b montre que l'organe tubulaire 3 peut contenir une entretoise de matériau élastique 10 adhérisée par ses extrémités aux deux parois opposées de cet organe, cette entretoise 10 s'étendant dans la direction principale z de la charge. Cela permet de disposer d'un paramètre supplémentaire pour ajuster la raideur verticale, sans perturber la raideur transversale (en y) ; en effet, la forme élancée de l'entretoise 10 permettra de faire en sorte que le roulement de l'organe tubulaire 3 entre ses appuis 2 ne soit pratiquement pas freiné.

Le support de la figure 2 est du même type général que celui de la figure 1 mais comporte deux organes tubulaires 3 à section elliptique (de grand axe vertical), disposés parallèlement l'un à l'autre et séparés par un espace vide d'élastomère 5. Un tel support permet d'obtenir une souplesse plus grande dans la direction longitudinale (axe des x).

Les figures 3 à 6 montrent des supports à gradient de raideur en direction verticale, destinés par exemple à supporter des moteurs.

Sur la figure 3 le gradient de raideur est obtenu grâce à trois alvéoles 6 ménagés dans la masse d'élastomère qui sépare les deux tubes 3 et qui sont allongés dans la direction des x. On conçoit que l'augmentation brusque de raideur verticale intervient lorsque les alvéoles 6 sont totalement aplatis sous l'action des efforts verticaux de compression s'exerçant sur les armatures 1. L'avantage résultant du fait que la section transversale elliptique des tubes 3 de matériau composite est à grand axe vertical a également été explicité dans ce qui précède.

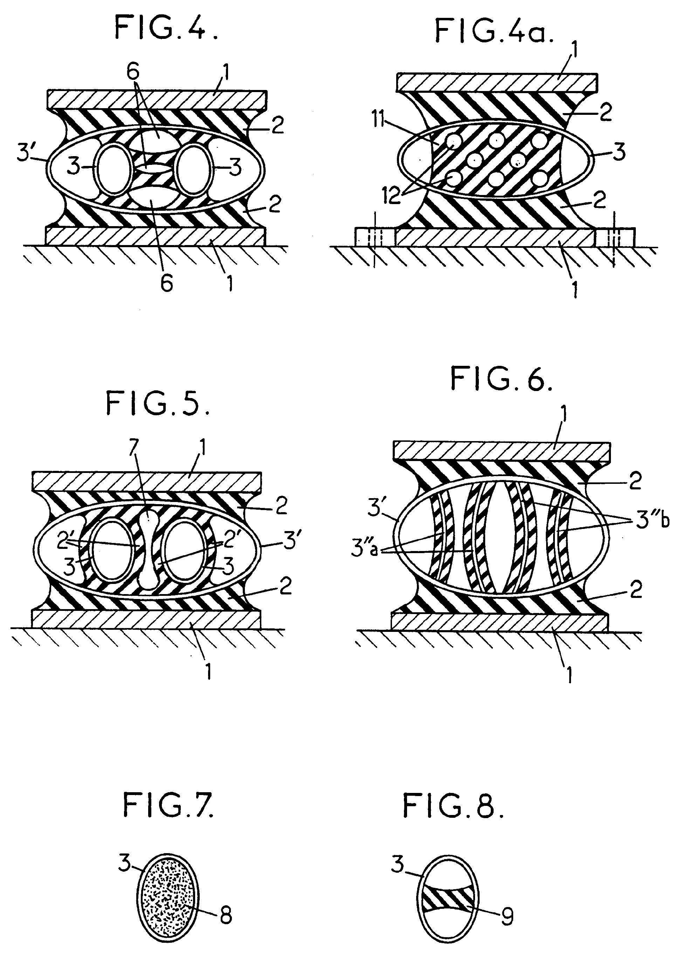

Le même phénomène d'écrasement des alvéoles 6 est utilisé dans le mode de réalisation de la figure 4. On a prévu en outre, dans ce cas, un organe tubulaire supplémentaire externe à plus faible raideur 3', éventuellement précontraint, entourant les organes tubulaires internes 3, tous étant en un matériau composite approprié. La raideur en vertical peut ainsi être très faible, jusqu'au moment où intervient la plus forte raideur des tubes internes 3.

Les figures 3 et 4 illustrent ce que l'on a appelé plus haut le "premier mode de réalisation".

Une variante est représentée à la figure 4a, qui montre, à l'intérieur d'un organe tubulaire 3, un bloc d'entretoise 11 en matériau élastique, adhérisé par ses extrémités aux deux parois opposées de cet organe. Ce bloc s'étend là encore dans la direction principale z de la charge en étant pourvu intérieurement d'alvéoles 12 de dimensions déterminées. L'augmentation de raideur survient là encore lors de l'écrasement complet des alvéoles 12. Leurs dimensions en vertical sont donc déterminées, comme dans les cas précédents, en fonction du choix de la valeur de l'écrasement du support, pour laquelle devra apparaître le gradient de raideur verticale. On peut d'ailleurs avoir plusieurs gradients, en prévoyant par exemple plusieurs rangées superposées d'alvéoles, dans lesquelles les diamètres de ceux-ci sont différents.

Le "second mode de réalisation" est illustré par la figure 5 et sa variante par la figure 6.

Sur la figure 5, on met en oeuvre un aplatissement de l'espace 7 ménagé entre les deux organes tubulaires internes 3, lesquels sont revêtus d'élastomère, référencé 2'. Cet aplatissement de l'espace 7 est obtenu par suite d'un élargissement de la section transversale des tubes 3 dans la direction des x lorsque des efforts verticaux de compression s'exercent sur les armatures 1. Lorsque cet aplatissement est complet, on obtient une brusque augmentation de la raideur verticale.

Il est à noter que cet espace 7 peut être rempli d'un matériau amortissant ou qu'il peut être fermé pour constituer l'équivalent d'une chambre à air ; il pourrait encore être rempli d'un matériau alvéolaire souple à cellules fermées.

L'organe tubulaire externe 3' a la même fonction que dans le mode de réalisation de la figure 4. Il est à noter par ailleurs qu'un amortissement important peut être obtenu en utilisant pour l'élastomère 2' un matériau à fort coefficient d'amortissement comme le butyl.

Dans la variante de la figure 6, on n'utilise en quelque sorte qu'une partie des parois des organes tubulaires 3, lesquelles sont ainsi réduites à des jambages courbes 3"a et 3"b de matériau composite enrobé d'élastomère.

La brusque augmentation de raideur en direction verticale apparaît dans ce cas lorsque les jambages de chaque paire entrent en contact deux à deux (de leur côté convexe) sous l'effet des efforts verticaux de compression s'exerçant sur les armatures 1.

On a montré sur les figures 7 et 8 deux moyens différents utilisables pour augmenter l'amortissement du support.

Dans le cas de la figure 7, on a représenté un organe tubulaire 3 du support, pourvu d'un remplissage de matériau d'amortissement, par exemple un gel de silicone, lequel a été référencé 8. Ce remplissage peut être contenu aux extrémités de l'organe tubulaire 3 par des membranes élastiques, par exemple en élastomère.

Dans le cas de la figure 8, l'amortissement est obtenu par une bande 9, par exemple en Butyl, reliant horizontalement deux parois opposées d'un organe tubulaire 3 du support.

Dans les figures 9 à 18, on a repris en général les mêmes références que dans les figures 1 à 8 pour désigner les mêmes éléments ou des éléments analogues ou jouant le même rôle.

Les armatures sont donc référencées 1, les blocs d'élastomère de liaison 2 ou 2a et 2b, et les organes tubulaires en matériau composite (fibres résistantes noyées dans une résine) en 3 ou 3a et 3b.

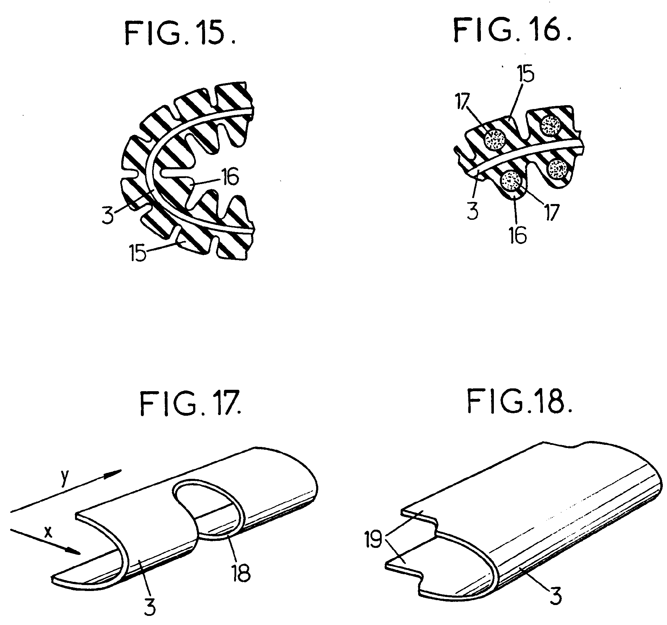

Les trois axes x, y et z des supports sont représentés seulement sur les figures 9 et 17, pour mémoire.

Sur la figure 9, on voit que les organes tubulaires 3a et 3b ont une section en U et sont ouverts l'un vers l'autre ; ils sont symétriques l'un de l'autre par rapport au plan contenant les axes y et z, plan par conséquent perpendiculaire à l'axe des x. Les armatures 1 sont reliées par un bloc d'élastomère 2 adhérisé à ces armatures et pouvant présenter un alvéole interne 5, lequel peut avoir le même rôle que dans le mode de réalisation de la figure 2 (obtention d'un gradient de raideur en direction z). Les bords longitudinaux 13 des organes tubulaires sont orientés dans des plans perpendiculaires à la direction z et sont encastrés et adhérisés dans le bloc 2. L'épaisseur e de l'élastomère compris entre les bords 13 et les armatures 1 doit être faible, étant donné que c'est essentiellement elle qui détermine la raideur du support dans la direction transversale y, laquelle, en principe, doit être élevée.

On peut éviter ce problème avec le mode de réalisation de la figure 10, dans lequel au contraire les bords longitudinaux 13 encastrés des organes tubulaires 3a et 3b sont parallèles au plan de symétrie susdéfini, avec un appui des chants de ces bords 13 sur les armatures respectives 1. Dans ce cas on peut conserver comme raideur du support dans la direction y essentiellement celle des organes tubulaires 3a et 3b eux-mêmes, puisque ceux-ci ne peuvent pas jouer par rapport aux armatures. On peut alors obtenir un support très anisotrope, selon les modalités exposées dans ce qui a été expliqué plus haut.

Le mode de réalisation de la figure 11 peut être considéré comme mixte par rapport aux deux précédents, avec un appui des bords 13 sur une seule armature 1, ces bords étant encastrés entre un bloc d'élastomère interne 2c, pourvu d'un alvéole 5, et un bloc externe 2b. A l'opposé de celui-ci, un bloc d'élastomère adhérisé 2a assure la liaison entre le dos de l'organe tubulaire 3 et l'autre armature 1. Là encore, si l'on souhaite préserver une très grande raideur en direction y, il conviendra que ce bloc 2a soit de très faible épaisseur (sur les figures 9 et 11 cette épaisseur peut être considérée comme exagérée).

Dans les modes de réalisation des figures 12 et 13, les organes tubulaires 3a et 3b ont une section en forme de C et sont ouverts à l'opposé l'un de l'autre (figure 12) ou l'un vers l'autre (figure 13).

Dans le cas de la figure 12 les armatures 1 peuvent être en forme de gouttières pour recevoir les blocs d'élastomère 2a et 2b dans lesquels les bords 13 des organes tubulaires, symétriques l'un de l'autre par rapport au plan susdéfini, sont encastrés. Un troisième bloc d'élastomère 2c adhérisé entre les dos des organes tubulaires peut servir à l'obtention d'un gradient de raideur grâce à son alvéole 5, d'une façon analogue à ce qui a été décrit plus haut. Ce mode de réalisation permet d'obtenir en tout cas une très faible raideur selon la direction x.

Le mode de réalisation de la figure 13 est plus compact, car on voit que dans ce cas il est facile de réaliser les armatures 1 sous la forme de simples plaques coplanaires.

Dans ce mode de réalisation également, on pourrait prévoir intérieurement un bloc d'élastomère supplémentaire pourvu d'un ou de plusieurs alvéoles, pour l'obtention du gradient de raideur.

Dans tous les modes de réalisation susdécrits il est avantageux d'enrober les organes tubulaires dans une couche d'élastomère de protection 14, comme ceci a été représenté aux figures 14 à 16. Ces organes tubulaires, qui sont assez vulnérables vis-à-vis des chocs, sont ainsi protégés de leur environnement (gravillons, humidité). Des bourrelets extérieurs relativement peu élevés 15, comme représenté à la figure 14, peuvent notablement augmenter la protection vis-à-vis des chocs sans augmentation de l'épaisseur des couches 14 sur toute leur surface, donc sans modifier notablement l'élasticité des organes tubulaires.

Comme représenté aux figures 15 et 16, on peut par contre prévoir, à la fois à l'extérieur et à l'intérieur des organes tubulaires 3, des bourrelets 15 et 16 fortement dentelés. Dans ce cas, on peut choisir leurs dimensions et leur espacement de sorte à faire varier la raideur du ressort d'une quantité prédéterminée, au-delà d'un certain déplacement vertical en compression et/ou en traction.

On peut également prévoir qu'une masse d'un matériau amortisseur 17 est incluse dans lesdits bourrelets, cette masse pouvant être par exemple un gel silicone.

A la figure 17, on a représenté encore un mode de réalisation possible d'un organe tubulaire élastique 3 pouvant être utilisé dans un support élastique de suspension conforme à la présente invention. On a ménagé dans le flanc de cet organe une ouverture à bord fermé 18, ce qui permet d'augmenter notablement le rapport entre la raideur dans la direction y et la raideur dans la direction x.

Le même résultat peut être obtenu avec le mode de réalisation de la figure 18, qui montre un organe tubulaire 3 à extrémités 19 d'encastrement rétrécies, à savoir de moindre longueur que celle de cet organe dans la direction y.

Enfin il est à noter, et quel que soit le mode de réalisation choisi pour les organes tubulaires 3, que ceux-ci pourront être feuilletés, c'est-à-dire constitués de plusieurs parois d'organes tubulaires élémentaires superposées.

## Revendications

1. Support élastique de suspension, du type comportant deux armatures (1) pourvues de moyens de fixation respectivement à deux ensembles entre lesquels le support doit être intercalé, et, comme élément élastique principal, destiné à supporter la charge, au moins un organe tubulaire élastique (3) ou profilé ouvert dont l'axe (y) s'étend perpendiculairement à la direction principale (z) dans laquelle s'exerce ladite charge, et dont la forme, l'épaisseur et les constituants confèrent au support la raideur souhaitée dans cette direction principale, des moyens de liaison appropriés (2) étant prévus de part et d'autre dudit organe tubulaire (3) ou profilé ouvert pour sa fixation entre lesdites armatures (1), support dans lequel lesdits moyens de liaison comprennent un matériau élastique (2) constitué d'une masse de type caoutchouc ou élastomère adhérisée ou fixée par d'autres moyens entre chaque organe tubulaire (3) et l'armature (1) correspondante et permettant audit organe tubulaire (3) ou profilé ouvert de rouler ou de basculer suivant l'axe (y) sur lesdits moyens de liaison.

2. Support selon la revendication 1, caractérisé en ce que ledit organe tubulaire (3) ou profilé ouvert est en un matériau composite constitué d'un enroulement filamentaire noyé dans une résine.

3. Support selon la revendication 2, caractérisé en ce que le matériau est constitué de fibres de verre, carbone, kevlar ou matériaux analogues, noyées dans une résine epoxy ou analogue.

4. Support selon la revendication 2 ou 3, caractérisé en ce que ledit enroulement est effectué selon la périphérie de l'organe tubulaire (3), en une ou plusieurs couches hélicoïdales.

5. Support selon l'une quelconque des revendications précédentes, caractérisé en ce que la section transversale des organes tubulaires (3) est au moins approximativement circulaire.

6. Support selon l'une quelconque des revendications 1 à 4, caractérisé en ce que la section transversale des organes tubulaires (3) est au moins approximativement elliptique ou ovale.

7. Support selon la revendication 6, caractérisé en ce que, s'agissant d'une section dont la dimension selon un axe est supérieure à la dimension selon l'axe perpendiculaire au précédent, l'organe tubulaire (3) considéré sera disposé avec son grand axe dirigé selon la direction principale dans laquelle s'exerce la charge, c'est-à-dire perpendiculairement au plan des armatures, son petit axe étant perpendiculaire à cette direction ainsi qu'à l'axe (y) de l'organe tubulaire (3).

8. Support selon l'une quelconque des revendications précédentes, caractérisé en ce qu'il comporte entre lesdites armatures (1) au moins deux organes tubulaires élastiques (3) disposés, avec un écartement, parallèlement l'un à l'autre.

9. Support selon l'une quelconque des revendications précédentes, caractérisé en ce que lesdits organes tubulaires (3) ou d'autres cavités du support contiennent un matériau amortisseur de remplissage (8).

10. Support selon l'une quelconque des revendications 1 à 8, caractérisé en ce qu'un élastomère à fort coefficient d'amortissement (9) relie intérieurement deux parois opposées des organes tubulaires (3).

11. Support selon l'une quelconque des revendications précédentes, caractérisé en ce qu'il est précontraint dans la direction de la charge principale.

12. Support élastique selon l'une quelconque des revendications précédentes, ce support devant avoir des raideurs différentes selon ses trois axes orthogonaux, et notamment une raideur dans la direction transversale (axe des y) d'un ou de plusieurs ordres de grandeur supérieure à la raideur dans la direction longitudinale (axe des x), la raideur dans la direction de la charge principale (ou direction verticale, axe des z) pouvant être intermédiaire entre les deux précédentes, caractérisé en ce que le ou les organes tubulaires (3) s'étendent dans ladite direction transversale, de sorte à pouvoir rouler sur lesdits moyens de liaison (2) lorsque les armatures (1) se déplacent l'une par rapport à l'autre dans ladite direction longitudinale, et en ce que lesdits moyens de liaison (2) reliant lesdits organes tubulaires (3) à leurs armatures (1) respectives possèdent une raideur élevée, au moins dans ladite direction transversale.

13. Support élastique selon la revendication 12, caractérisé en ce que sont prévus sur lesdites armatures (1) des crans (4) faisant saillie au moins vers l'intérieur du support et dirigés, parallèlement les uns aux autres, dans la direction longitudinale.

14. Support selon l'une quelconque des revendications précédentes, caractérisé en ce que le ou les organes tubulaires (3) contiennent une entretoise de matériau élastique (10) adhérisée par ses extrémités aux deux parois opposées desdits organes, cette entretoise s'étendant dans la direction principale de la charge.

15. Support selon l'une quelconque des revendications précédentes, caractérisé en ce qu'il comporte en outre un élément élastique possédant un gradient de raideur en direction verticale (axe des z), à savoir dont la raideur augmente brusquement lorsqu'un écrasement déterminé du support est atteint.

16. Support selon l'une quelconque des revendications 8 à 15, dans lequel au moins un espace vide d'élastomère est prévu entre lesdits organes tubulaires, caractérisé en ce que ledit espace vide comporte plusieurs alvéoles (6) fermés superposés dont la section transversale s'étend essentiellement dans la direction longitudinale, ces alvéoles (6) étant destinés à être totalement aplatis lorsque ledit écrasement déterminé du support est atteint.

17. Support selon l'une quelconque des revendications 8 à 15, dans lequel au moins un espace vide (7) d'élatomère est prévu entre lesdits organes tubulaires, caractérisé en ce que la section transversale dudit espace vide (7) s'étend essentiellement en direction verticale, cet espace étant destiné à être totalement aplati lorsque ledit écrasement déterminé du support est atteint, cet aplatissement étant consécutif à un élargissement -- dans ladite direction longitudinale-- de la section transversale desdits organes tubulaires (3).

18. Support selon la revendication 16 ou 17, caractérisé en ce qu'il comporte en outre un organe tubulaire externe (3'), entourant les deux dits organes tubulaires (3) disposés parallèlement l'un à l'autre, ces derniers étant constitués d'un matériau composite à raideur relativement grande, tandis que ledit organe tubulaire externe (3') est constitué d'un matériau composite à faible raideur.

19. Support selon la revendication 6, du type comportant en outre un élément élastique possédant un gradient de raideur en direction verticale (axe des z), à savoir dont la raideur augmente brusquement lorsqu'un écrasement déterminé du support est atteint, caractérisé en ce que ledit organe tubulaire (3') est disposé de sorte que sa section transversale s'étende globalement dans ladite direction longitudinale, et en ce que ledit élément élastique est constitué par au moins une paire de jambages (3"a,3"b) de matériau composite enrobé d'élastomère , s'étendant approximativement en direction verticale et reliant les parois opposées dudit organe tubulaire (3'), étant ainsi comprimés en bout sous l'action des efforts verticaux s'exerçant sur lesdites armatures (1), les jambages de la même paire étant légèrement courbés l'un vers l'autre, de telle sorte que lorsqu'un effort vertical déterminé est atteint ils prennent appui l'un sur l'autre, ce qui augmente brusquement la raideur du support dans la direction verticale.

20. Support selon la revendication 6, du type comportant en outre un élément élastique possédant un gradient de raideur en direction verticale (axe des z), à savoir dont la raideur augmente brusquement lorsqu'un écrasement déterminé du support est atteint, caractérisé en ce que ledit organe tubulaire (3) est disposé de sorte que sa section transversale s'étende globalement dans ladite direction longitudinale, et en ce que ledit élément élastique est constitué par un bloc intérieur d'entretoise (11) en matériau élastique adhérisé par ses extrémité aux deux parois opposées dudit organe tubulaire (3), ce bloc (11) s'étendant dans la direction principale de la charge et étant pourvu intérieurement d'alvéoles (12) de dimensions déterminées.

21. Support selon l'une quelconque des revendications précédentes, caractérisé en ce qu'il est superposé solidairement à un support du même type, les orientations de leurs organes tubulaires respectifs (3) étant croisées.

22. Support élastique de suspension selon l'une quelconque des revendications précédentes, du type comportant deux armatures (1) pourvues de moyens de fixation respectivement à deux ensembles entre lesquels le support doit être intercalé, caractérisé en ce qu'il comporte comme élément élastique principal, destiné à supporter la charge, au moins un profilé ouvert élastique (3), dont l'axe (y) s'étend perpendiculairement à la direction principale (z) dans laquelle s'exerce ladite charge, des moyens de liaison appropriés (2) étant prévus de part et d'autre dudit profilé ouvert (3) pour sa fixation entre lesdites armatures (1).

23. Support selon la revendication 22, caractérisé en ce qu'il comporte au moins deux profilés ouverts (3a, 3b).

24. Support selon la revendication 23, caractérisé en ce que lesdits profilés ouverts (3a, 3b) sont identiques.

25. Support selon la revendication 22 ou 24, caractérisé en ce qu'il comporte un plan de symétrie défini par ladite direction principale (z) et par ledit axe (y).

26. Support selon l'une quelconque des revendications 23 à 25, caractérisé en ce que les deux dits profilés (3a, 3b) sont ouverts l'un vers l'autre.

27. Support selon l'une quelconque des revendications 23 à 25, caractérisé en ce que les deux dits profilés (3a, 3b) sont ouverts à l'opposé l'un de l'autre.

28. Support selon l'une quelconque des revendications 22 à 27, caractérisé en ce que lesdits moyens de fixation du ou des profilés ouverts (3 ; 3a, 3b) aux armatures (1) comprennent des ancrages des bords longitudinaux (13) desdits profilés ouverts dans un ou plusieurs blocs d'élastomère (2 ; 2a, 2b) adhérisés aux armatures (1).

29. Support selon la revendication 28, caractérisé en ce que lesdits bords longitudinaux ( 13 ) des profilés ouverts (3 ; 3a, 3b) sont orientés dans des plans parallèles à un plan défini par la direction principale (z) et par ledit axe ( y ).

30. Support selon la revendication 28, caractérisé en ce que lesdits bords longitudinaux (13) des profilés ouverts (3 ; 3a, 3b) sont orientés dans des plans perpendiculaires à la direction principale (z).

31. Support selon l'une quelconque des revendications 22 à 30, caractérisé en ce que le ou les profilés ouverts (3 ; 3a, 3b) sont enrobés dans une couche (14) d'élastomère de protection.

32. Support selon la revendication 31, caractérisé en ce que ladite couche de protection (14) présente des bourrelets (15,16) à l'extérieur et/ou à l'intérieur du profilé ouvert (3 ; 3a ; 3b).

33. Support selon la revendication 32, caractérisé en ce que lesdits bourrelets (15,16) sont fortement dentelés, et en ce que leurs dimensions et leur espacement sont choisis de sorte à faire varier la raideur du ressort d'une quantité prédéterminée, au-delà d'un certain déplacement vertical en compression et/ou en traction.

34. Support selon la revendication 32 ou 33, caractérisé en ce qu'une masse d'un matériau amortisseur (17) est incluse dans lesdits bourrelets.

35. Support selon l'une quelconque des revendications 22 à 34, caractérisé en ce que les profilés ouverts (3) comportent une ouverture (18) dans leur flanc.

36. Support selon l'une quelconque des revendications 22 à 35, caractérisé en ce que les profilés ouverts (3) ont des extrémités (19) d'encastrement rétrécies, à savoir de moindre longueur que celle de l'organe considéré dans la direction y.

37. Support selon l'une quelconque des revendications 22 à 36, caractérisé en ce que les profilés ouverts (3) sont feuilletés.

**Patentansprüche**

1. Elastische Stütze für Aufhängungen, die aus folgenden Teilen besteht: zwei Armaturen (1) mit Einrichtungen zur Befestigung an den beiden entsprechenden Teilen, zwischen denen die Stütze eingefügt werden muß, und als elastisches Hauptelement zum Abstützen der Belastung wenigstens einem elastischen, rohrförmigen Werkstück oder Teil (3) oder einem offenen Profil, dessen Achse (y) sich senkrecht zu der Achse (z) der Hauptrichtung erstreckt, in der die Belastung auftritt und dessen Form, Stärke und Bestandteile der Stütze die gewünschte Steifigkeit in der Hauptrichtung verleihen, wobei geeignete Verbindungmittel (2) auf beiden Seiten des rohrförmigen Werkstückes oder offenen Profils zur Befestigung zwischen den Armaturen (1) vorgesehen sind, und die Verbindungsmittel aus elastischem Material, wie Kautschuk oder einem Elastomer bestehen, das durch andere Mittel zwischen jedem rohrförmigen Werkstück (3) und der entsprechenden Armatur (1) angebracht oder befestigt wird und ermöglichen, daß das rohrförmige Werkstück (3) oder das offene Profil in Richtung der Achse (y) auf den Verbindungsmitteln abrollen oder kippen kann.

2. Stütze nach Anspruch 1, dadurch gekennzeichnet, daß das rohrförmige Werkstück (3) oder offene Profil aus einem zusammengesetzten Material hergestellt ist, das aus einer in ein Kunstharz oder dergleichen eingebetteten Wicklung aus faserigem Material besteht.

3. Stütze nach Anspruch 2, dadurch gekennzeichnet, daß das zusammengesetzte Material aus Fasern aus Glas, Kohlenstoff, Kevlar oder einem ähnlichen Material besteht, die in ein Epoxyharz oder dergleichen eingebettet sind.

4. Stütze nach den Ansprüchen 2 oder 3, dadurch gekennzeichnet, daß die Wicklung längs des Umfanges des rohrförmigen Werkstückes (3) in einer oder mehreren schraubenförmigen Schichten verläuft.

5. Stütze nach einem der vorhergehenden Ansprüche, dadurch gekennzeichnet, daß der Querschnitt der rohrförmigen Werkstücke (3) wenigstens annähernd kreisförmig ist.

6. Stütze nach einem der Ansprüche 1 bis 4, dadurch gekennzeichnet, daß die rohrförmigen Werkstücke (3) einen wenigstens annähernd elliptischen oder ovalen Querschnitt haben.

7. Stütze nach Anspruch 6, dadurch gekennzeichnet, daß in den Fällen, in denen der Querschnitt längs einer Achse größer ist als der Querschnitt in der senkrecht zu dieser Achse verlaufenden Achse, das rohrförmige Werkstück (3) so angeordnet ist, daß seine längere Achse in der Hauptrichtung verläuft, in der die Belastung auftritt, d. h. senkrecht zur Ebene der Armaturen, während seine kürzere Achse senkrecht zu dieser Richtung sowie zu der Achse (y) des rohrförmigen Werkstückes verläuft.

8. Stütze nach einem der vorhergehenden Ansprüche, dadurch gekennzeichnet, daß zwischen den Armaturen (1) wenigstens zwei elastische rohrförmige Werkstücke (3) im Abstand voneinander und parallel zueinander angeordnet sind.

9. Stütze nach einem der vorhergehenden Ansprüche, dadurch gekennzeichnet, daß die rohrförmigen Werkstücke oder andere Hohlräume der Stütze ein dämpfendes Füllmaterial (8) enthalten.

10. Stütze nach einem der Ansprüche 1 bis 8, dadurch gekennzeichnet, daß zwei sich gegenüberliegende Wandungen des rohrförmigen Werkstückes (3) innen durch ein Elastomer mit hohem Dämpfungskoeffizienten miteinander verbunden sind.

11. Stütze nach einem der vorhergehenden Ansprüche, dadurch gekennzeichnet, daß sie in Richtung der Hauptbelastung vorgespannt ist.

12. Elastische Stütze nach einem der vorhergehenden Ansprüche mit unterschiedlichen Steifigkeiten längs der drei orthogonalen Achsen, deren Steifigkeit insbesondere in Richtung der Querachse (y) doppelt so groß oder mehrfach größer ist als die Steifigkeit in Längsrichtung (Achse x), wobei die Steifigkeit in Richtung der Hauptbelastung oder in senkrechter Richtung (Achse z) zwischen den beiden vorstehend erwähnten Steifigkeiten liegt, dadurch gekennzeichnet, daß das Rohrstück oder die Rohrstücke (3) sich in Querrichtung erstrecken, so daß sie auf den Verbindungsmitteln (2) abrollen können, wenn sich die Armaturen (1) zueinander in Längsrichtung verschieben und daß die Verbindungsmittel (2), die die Rohrstücke (3) mit den zugehörigen Armaturen (1) verbinden, eine erhöhte Steifigkeit, wenigstens in Querrichtung aufweisen.

13. Stütze nach Anspruch 12, dadurch gekennzeichnet, daß an den Armaturen (1) Vorsprünge (4) vorgesehen sind, die gegenüber der Stütze wenigstens nach innen vorstehen und in Längsrichtung parallel zueinander ausgerichtet sind.

14. Stütze nach einem der vorhergehenden Ansprüche, dadurch gekennzeichnet, daß das Rohrstück oder die Rohrstücke (3) eine Einlage (10) aus elastischem Material enthalten, die an zwei sich gegenüberliegenden Wänden der Rohrstücke an diesen befestigt ist, wobei die Einlage sich in der Hauptrichtung der Belastung erstreckt.

15. Stütze nach einem der vorhergehenden Ansprüche, dadurch gekennzeichnet, daß sie darüber hinaus ein elastisches Element enthält, das einen Steifigkeitsgradienten in senkrechter Richtung (Achse z) aufweist, d. h. dessen Steifigkeit sich sprunghaft vergrößert, wenn eine bestimmte Stauchung der Stütze erreicht ist.

16. Stütze nach einem der Ansprüche 8 bis 15, bei der wenigstens ein nicht mit elastomerem Material gefüllter Raum zwischen den Rohrstücken vorgesehen ist, dadurch gekennzeichnet, daß der Zwischenraum aus mehreren geschlossenen übereinander angeordneten Zellen (6) besteht, deren Querschnitt im wesentlichen in Richtung der Längsachse gestreckt ist, wobei die Zellen (6) dazu dienen, völlig zusammengedrückt zu werden, wenn eine bestimmte Stauchung der Stütze erreicht ist.

17. Stütze nach einem der Ansprüche 8 bis 15, bei der wenigstens ein nicht mit elastomerem Material ausgefüllter Hohlraum (7) zwischen den beiden Rohrstücken vorgesehen ist, dadurch gekennzeichnet, daß der Querschnitt des Hohlraumes (7) im wesentlichen in senkrechter Richtung gestreckt ist und völlig zusammengedrückt werden soll, wenn eine bestimmte Stauchung der Stütze erreicht ist, wobei das Zusammendrücken die Folge einer Verbreiterung des Querschnittes der Rohrstücke in Längsrichtung ist.

18. Stütze nach den Ansprüchen 16 und 17, dadurch gekennzeichnet, daß sie ferner ein äußeres rohrartiges Teil (3') enthält, das die beiden Rohrstücke (3) umgibt, die parallel zueinander angeordnet sind, wobei die Rohrstücke (3) aus einem zusammengesetzten Material mit relativ großer Steifigkeit bestehen, während das äußere rohrartige .Teil (3') aus einem zusammengesetzten Material mit geringer Steifigkeit besteht.

19. Stütze nach Anspruch 6, die zusätzlich ein elastisches Element, mit einem Steifigkeitsgradienten in senkrechter Richtung (Achse z) aufweist, d. h. dessen Steifigkeit sich schlagartig vergrößert, wenn eine bestimmte Stauchung der Stütze erreicht ist, dadurch gekennzeichnet, daß das rohrartige Teil (3') so angeordnet ist, daß der Querschnitt global in Längsrichtung gestreckt ist und daß das elastische Element aus wenigstens einem Paar von Stützwänden (3"a, 3"b) aus zusammengesetztem Material besteht, das mit einem Elastomer umhüllt ist, die sich annähernd in senkrechter Richtung erstrecken und sich gegenüberliegende Wandungen des rohrartigen Teils (3') verbinden, wobei die Stützwände des gleichen Paares, die unter der Wirkung von in senkrechter Richtung auf die Armaturen (1) einwirkenden Kräften zusammengedrückt werden, sich leicht aufeinander zu verbiegen, so daß sie sich, wenn ein bestimmter Druck in senkrechter Richtung erreicht ist, gegeneinander abstützen, wodurch die Steifigkeit der Stütze in senkrechter Richtung sprunghaft vergrößert wird.

20. Stütze nach Anspruch 6, die außerdem ein elastisches Element mit einem Steifigkeitsgradienten in senkrechter Richtung (Achse z) enthält, d. h. deren Steifigkeit sich sprunghaft vergrößert, wenn eine bestimmte Stauchung der Stütze erreicht ist, dadurch gekennzeichnet, daß das Rohrstück (3) so angeordnet ist, daß sein querschnitt global in Längsrichtung gestreckt ist und daß das elastische Element aus einem inneren Versteifungsblock (11) aus elastischem Material besteht, der an seinen Enden mit zwei sich gegenüberliegenden Wandungen des Rohrstückes (3) verbunden ist, wobei der Block (11) sich in der Hauptrichtung der Belastung erstreckt und im Inneren mit Zellen (12) mit bestimmten Abmessungen versehen ist.

21. Stütze nach einem der vorhergehenden Ansprüche, dadurch gekennzeichnet, daß sie fest auf eine Stütze des gleichen Typs aufgesetzt ist, wobei sich die Richtungen der entsprechenden Rohrstücke (3) kreuzen.

22. Stütze nach einem der vorhergehenden Ansprüche, die zwei Armaturen (1) enthält, die mit Einrichtungen zur Befestigung an zwei Konstruktionsteilen versehen ist, zwischen denen die Stütze eingesetzt werden soll, dadurch gekennzeichnet, daß sie als elastisches Hauptelement zum Abstützen der Belastung wenigstens ein elastisches offenes Profil (3) enthält, dessen Achse (y) sich senkrecht zur Hauptrichtung (z) erstreckt, in der die Belastung auftritt, wobei geeignete Verbindungsmittel (2) an beiden Seiten des offenen Profils (3) zur Befestigung zwischen den Armaturen (1) vorgesehen sind.

23. Stütze nach Anspruch 22, dadurch gekennzeichnet, daß sie wenigstens zwei offene Profile (3a, 3b) enthält.

24. Stütze nach Anspruch 23, dadurch gekennzeichnet, daß die offenen Profile (3a, 3b) identisch sind.

25. Stütze nach den Ansprüchen 22 oder 24, dadurch gekennzeichnet, daß sie eine Symmetrieebene aufweist, die durch die Hauptrichtung (z) und durch die Achse (y) bestimmt ist.

26. Stütze nach einem der Ansprüche 23 bis 25, dadurch gekennzeichnet, daß die beiden Profile (3a, 3b) zueinander offen sind.

27. Stütze nach einem der Ansprüche 23 bis 25, dadurch gekennzeichnet, daß die beiden Profile (3a, 3b) in entgegengesetzten Richtungen offen sind.

28. Stütze nach einem der Ansprüche 22 bis 27, dadurch gekennzeichnet, daß die Mittel zur Befestigung des oder der offenen Profile (3, 3a, 3b) an den Armaturen (1) Verankerungen der Längskanten (13) der offenen Profile in einem oder mehreren Blöcken (2, 2a, 2b) aus elastomerem Material umfassen, die an den Armaturen angebracht sind.

29. Stütze nach Anspruch 28, dadurch gekennzeichnet, daß die Längskanten (13) der offenen Profile (3, 3a, 3b) in Ebenen ausgerichtet sind, die parallel zu einer Ebene verlaufen, die durch die Hauptrichtung (z) und durch die Achse (y) bestimmt ist.

30. Stütze nach Anspruch 28, dadurch gekennzeichnet, daß die Längskanten (13) der offenen Profile (3, 3a, 3b) in Ebenen ausgerichtet sind, die senkrecht zur Hauptrichtung (z) verlaufen.

31. Stütze nach einem der Ansprüche 22 bis 30, dadurch gekennzeichnet, daß das oder die offenen Profile (3, 3a, 3b) mit einer Schutzschicht (14) aus elastomerem Material umhüllt sind.

32. Stütze nach Anspruch 31, dadurch gekennzeichnet, daß die Schutzschicht (14) an der Außenseite und/oder Innenseite des offenen Profils (3, 3a, 3b) mit Wülsten (15, 16) versehen ist.

33. Stütze nach Anspruch 32, dadurch gekennzeichnet, daß die Wülste (15, 16) stark gezahnt und ihre Abmessungen und ihre Abstände so ausgewählt sind, daß die Steifigkeit der nachgiebigen Halterung um eine vorgegebene Größe oberhalb einer bestimmten senkrechten Verschiebung bei Druck und/oder Zugbelastung veränderbar ist.

34. Stütze nach den Ansprüchen 32 oder 33, dadurch gekennzeichnet, daß in die Wülste eine Masse aus Dämpfungsmaterial (17) eingeschlossen ist.

35. Stütze nach einem der Ansprüche 22 bis 34, dadurch gekennzeichnet, daß die offenen Profile (3) in ihrer Seitenwandung eine Öffnung (18) enthalten.

36. Stütze nach einem der Ansprüche 22 bis 35, dadurch gekennzeichnet, daß die Enden (19) der offenen Profile verjüngte Abschnitte aufweisen, d. h., in Richtung der Achse (y) eine geringere Länge haben als das Profil.

37. Stütze nach einem der vorhergehenden Ansprüche 32 bis 36, dadurch gekennzeichnet, daß die offenen Profile (3) aus geschichtetem Material bestehen.

**Claims**

1. A resilient suspension support, of the type comprising two frameworks (1) provided with means for fastening them to two assemblies respectively, between which the support is to be interposed, and, as the main resilient element for supporting the load, at least one resilient tubular member (3) or open profile, whose axis (y) extends perpendicular to the main direction (z) in which the load is exerted, and of which the shape, thickness and materials give the support the stiffness desired in this main direction, appropriate connecting means (2) being provided on either side of said tubular member (3) or open profile for fastening it between said frameworks (1), these connecting means comprising an elastic material (2) formed of a mass of rubber or elastomeric type, bonded or fixed by other means between each resilient tubular member (3) and the corresponding framework (1) and enabling said resilient tubular member (3) or open profile to roll or tilt about the axis (y) on said connecting means.

2. A support according to claim 1, characterized in that said tubular member (3) or open profile is made from a composite material consisting of a filament winding embedded in a resin.

3. A support according to claim 2, characterized in that the material consists of fibres of glass, carbon, Kevlar or similar materials, embedded in an epoxy resin or the like.

4. A support according to claim 2 or 3, characterized in that said winding is carried out round the periphery of the resilient tubular member (3) in one or more helical layers.

5. A support according to any of the preceding claims, characterized in that the cross-section of the tubular member (3) is at least approximately circular.

6. A support according to any of claims 1 to 4, characterized in that the cross-section of the tubular member (3) is at least approximately elliptical or oval.

7. A support according to claim 6, characterized in that, in the case of a section whose dimension along one of axis is greater than the dimension along the axis perpendicular thereto, the tubular member (3) in question is arranged with its major axis directed according to the main direction in which the load is exerted, that is to say perpendicular to the plane of the frameworks, its minor axis being perpendicular to this direction as well as to the axis (y) of the tubular member (3).

8. A support according to any of the preceding claims, characterized in that it includes at least two spaced resilient tubular members (3) arranged parallel to one another between said frameworks (1).

9. A support according to any of the preceding claims, characterized in that said tubular members (3) or other cavities of the support contain a damping filler (8).

10. A support according to any of claims 1 to 8, characterized in that an elastomer (9) with a high damping coefficient internally connects two opposite walls of the tubular members (3).

11. A support according to any of the preceding claims, characterized in that it is prestressed in the direction of the main load.

12. A support according to any of the preceding claims, wherein this support is to have different stiffnesses according to its three orthogonal axes, and in particular a stiffness in the transverse direction (y axis) of one or several orders of magnitude greater than the stiffness in the lengthwise direction (x axis), while the stiffness in the direction of the main load (or vertical direction, z axis) can be intermediate between the two previous ones, characterized in that the tubular member(s) (3) extend in said transverse direction so as to be able to roll on said connecting means (2) when the frameworks (1) move one in relation to the other in said lengthwise direction, and in that said connecting means (2) connecting said tubular members (3) to their respective frameworks (1) have a higher stiffness, at least in said transverse direction.

13. A resilient support according to claim 12, characterized in that catches (4) are provided on said frameworks (1), projecting at least towards the interior of the support and directed parallel to one another in the lengthwise direction.

14. A support according to any of the preceding claims, characterized in that the tubular member(s) (3) contain a spacer (10) of elastic material bonded at its ends to two opposite walls of said members, this spacer extending in the main direction of the load.

15. A support according to any of the preceding claims, characterized in that it further includes a resilient element with a stiffness gradient in the vertical direction (z axis), i.e. whose stiffness sharply increases when a predetermined compression of the support is reached.

16. A support according to any of claims 8 to 15, in which at least one void space in an elastomer is provided between said tubular members, characterized in that said void space incorporates several superimposed closed cells (6), the cross-section of which extends essentially in the lengthwise direction, these cells (6) being adapted to be totally flattened out when said predetermined compression of the support is reached.

17. A support according to any of claims 8 to 15, in which at least one void space (7) in an elastomer is provided between said tubular members, characterized in that the cross-section of said void space (7) essentially extends in the vertical direction, this space being adapted to be totally flattened out when said predetermined compression of the support is reached, this flattening out following upon a widening out - in said lengthwise direction - of the cross-section of said tubular members (3).

18. A support according to claim 16 or 17, characterized in that it further includes an external tubular member (3') surrounding the said two tubular members (3) arranged parallel to one another, the latter members consisting of a composite material with a relatively high stiffness, whereas said external tubular member (3') consists of a composite material with low stiffness.

19. A support according to claim 6, of the type further comprising a resilient member with a stiffness gradient in the vertical direction (z axis) whose stiffness increases sharply when a predetermined flattening out of the support is reached, characterized in that said tubular member (3') is arranged in such a way that its cross-section extends globally in said lengthwise direction and in that said resilient member consists of at least one pair of legs (3"a, 3"b) of a composite material clad in elastomer, extending approximately in the vertical direction and connecting the opposite walls of said tubular member (3'), being thus compressed endwise under the action of vertical stresses exerted on said frameworks (1), the legs of the same pair being slightly curved towards one another, in such a way that, when a predetermined vertical stress is reached, they abut one another, which sharply increases the stiffness of the support in the vertical direction.

20. A support according to claim 6, of the type further comprising a resilient member with a stiffness gradient in the vertical direction (z axis) whose stiffness increases sharply when a predetermined flattening out of the support is reached, characterized in that said tubular member (3) is arranged in such a way that its cross-section globally extends in said lengthwise direction, and in that said resilient member consists of an internal spacer block (11) of an elastic material bonded at its ends to the two opposite side walls of said tubular member (3), wherein this block (11) extends in the main direction of the load and is internally provided with cells (12) having predetermined dimensions.

21. A support according to any of the preceding claims, characterized in that it is superimposed integrally on a support of the same type, the orientations of their respective tubular members (3) being crossed.

22. A resilient suspension support according to any preceding claim, of the type comprising two frameworks (1) provided with means for fastening them to two assemblies respectively, between which the support is to be interposed, characterized in that it comprises as main resilient element for supporting the load, at least one resilient open profile (3), the axis (y) of which extends perpendicular to the main direction (z) in which said load is exerted, appropriate connecting means (2) being provided on either side of said open profile (3) for fastening it between said frameworks (1).

23. A support according to claim 22, characterized in that it comprises at least two open profiles (3a, 3b).

24. A support according to claim 23, characterized in that said open profiles (3a, 3b) are identical.

25. A support according to claim 22 or 23, characterized in that it has a plane of symmetry defined by said main direction (z) and said axis (y).

26. A support according to any of claims 23 to 25, characterized in that the two open profiles (3a, 3b) are open towards one another.

27. A support according to any of claims 23 to 25, characterized in that the two said profiles (3a, 3b) are open opposite to one another.

28. A support according to any of claims 22 to 27, characterized in that said means fastening the open profiles (3; 3a, 3b) to the frameworks (1) are formed by anchoring the lengthwise edges (13) of said open profiles in one or more elastomer blocks (2; 2a, 2b) bonded to the frameworks (1).

29. A support according to claim 28, characterized in that said lengthwise edges (13) of the open profiles (3; 3a, 3b) are oriented in planes parallel to a plane defined by the main direction (z) and said axis (y).

30. A support according to claim 28, characterized in that said lengthwise edges (13) of the open profiles (3; 3a, 3b) are oriented in planes perpendicular to the main direction (z).

31. A support according to any of claims 22 to 30, characterized in that the open profiles (3; 3a, 3b) are sheathed in a protective elastomer layer (14).

32. A support according to claim 31, characterized in that the protective layer (14) has beads or ridges (15, 16) outside and/or inside the open profile (3; 3a, 3b).

33. A support according to claim 32, characterized in that said beads (15, 16) are strongly crenellated and in that their dimensions and their spacing are selected in such a way as to vary the stiffness of the spring by a predetermined amount beyond a certain vertical displacement in compression and/or in tension.

34. A support according to claim 32 or 33, characterized in that a mass of damping material (17) is incorporated in said beads or ridges.

35. A support according to any of claims 22 to 34, characterized in that the open profiles (3) each have an opening (18) in their flank.

36. A support according to any of claims 22 to 35, characterized in that the open profiles (3) have narrowed attachment ends (19), i.e. of a shorter length than that of the member in question in the y direction.

37. A support according to any of claims 22 to 36, characterized in that the open profiles (3) are laminated.

## FIG.1.

## FIG.1a.

## FIG.1b.

## FIG.2.

## FIG.3.

FIG.4.

FIG.4a.

FIG.5.

FIG.6.

FIG.7.

FIG.8.

FIG. 9.

FIG. 10.

FIG. 11.

FIG. 12.

FIG. 13.

FIG. 14.

FIG. 15.

FIG. 16.

FIG. 17.

FIG. 18.